# FASCICULE DE BREVET EUROPEEN

(11) **EP 0 394 116 B1**
(45) Date de publication et mention de la délivrance du brevet: **31.08.1994**
(21) Numéro de dépôt: 90401029.5
(22) Date de dépôt: 13.04.1990
(51) Int. Cl.: C12G 3/06

(54) **Procédé d'aménagement dans un réceptacle d'un insert, moyens en vue de la mise en oeuvre de ce procédé et réceptacles pourvus de ces moyens**
Verfahren zur Fixierung eines Einsatzes in einem Behälter, Hilfsmittel zur Durchführung dieses Verfahrens und mit diesen Hilfsmitteln versehene Behälter
Process for fixing an insert in a container, means for realising the process and container foreseen with those means

(30) Priorité: 21.04.1989 FR 8905837
(43) Date de publication de la demande: 24.10.1990
(73) Titulaire: Depeaux, Pierre, F-60850 Saint Germer de Fly (FR); Depeaux, née Guiseppe, Marie Françoise, F-60850 Saint Germer de Fly (FR)
(72) Inventeur: Depeaux, Pierre, F-60850 Saint Germer de Fly (FR); Depeaux, née Guiseppe, Marie Françoise, F-60850 Saint Germer de Fly (FR)
(74) Mandataire: Ecrepont, Robert

(56) Documents cités:
- US-A- 2 135 622
- US-A- 2 289 245
- US-A- 3 021 780

## Description

L'invention se rapporte à un procédé d'aménagement dans un réceptacle d'un insert comprenant des éléments longilignes sensiblement plats.

L'invention se rapporte également aux moyens en vue de la mise en oeuvre de ce procédé ainsi qu'aux réceptacles pourvus de ces moyens.

Plus particulièrement mais non exclusivement, l'invention concerne l'aménagement dans des réceptacles de stockage de liquides tels les jus de raisin, d'un insert comprenant des lames de bois et notamment de lames de chêne ou de châtaignier.

Tel que cela est connu, la vinification comprend plusieurs étapes au cours d'au moins certaines desquelles on laisse le jus de raisin séjourner dans des réceptacles et ce un certain temps en vue d'obtenir divers effets.

Parmi les effets bénéfiques attendus, on peut noter l'enrichissement du jus surtout en tanin mais aussi en arôme, par suite des échanges qui se produisent entre le jus et la paroi du réceptacle lorsque celle-ci est en bois et précisément en chêne ou en châtaignier.

Cet enrichissement se traduit généralement par une amélioration du vin qui sera obtenu.

Bien entendu, ce phénomène d'échange avec la paroi en bois est exploité pour la fabrication d'autres boissons que le vin, parmi lesquelles, on peut par exemple citer le whisky, les liqueurs, etc ...

Les réceptacles en bois sont de plus en plus onéreux et posent de gros problèmes d'entretien.

Leur coût tient notamment au fait que, pour leur construction, ils font apel à des douves réalisables seulement à partir de planches extraites des parties les plus riches des chênes ou des châtaigniers.

De ce fait, certains utilisateurs ont imaginé d'y substituer des réceptacles en matériau neutre et inoxydable, tel l'acier inoxydable ou les matières plastiques.

Particulièrement avec les réceptacles en matériau neutre, la facilité de nettoyage, les possibilités d'une rapide et contrôlée variation de la température étaient apparues avantageuses.

En dépit de ces avantages, la perte du contact avec le bois s'est avérée être un vice rédhibitoire pour leur utilisation pendant toute la vinification.

Pour limiter cet inconvénient, au cours de la vinification, certains exploitants utilisent successivement des cuves en matériau neutre puis des barriques en bois.

Si cette solution a permis d'obtenir d'assez bons résultats, elle n'en reste pas moins onéreuse puisque ne résoud que partiellement le problème.

Pour préserver les échanges avec le bois, sans devoir utiliser de récipients en bois ni donc un bois aussi riche que celui qu'exigent leurs douves, l'homme de l'art a déjà imaginé d'immerger du bois dans le jus de raisin.

Par exemple, on a déjà immergé du bois sous forme de copeaux libres ou contenus dans un sac étroit perméable au jus.

L'un des inconvénients de ce procédé est qu'on ne peut pas contrôler précisément la surface d'échange des copeaux.

En effet, alors même que le poids de deux sacs serait équivalent, la surface utile des copeaux peut varier considérablement notamment selon leur taille.

En outre, les copeaux se réduisent en poussière et souillent le vin.

Pour tenter de remédier à cet inconvénient, on a déjà imaginé d'utiliser des inserts en bois présentant une surface d'échange plus facilement contrôlable que celle de copeaux telle des plaques ou des lames mais s'est alors posé le problème du maintien en bonne place de ces éléments dans chaque réceptacle notamment pour que, malgré la flottabilité du bois, ils demeurent sous le niveau du jus et pour qu'ils ne gênent pas le passage de sondes ou autres organes en se plaçant devant la trappe de visite.

Pour remédier à cet inconvénient, il est connu (FR-A-2.504.498) d'utiliser un insert en bois d'encombrement juste inférieur au volume du récipient, qui comprend un certain nombre d'éléments longilignes qui, avant insertion dans le réceptacle, sont assemblés entre eux pour former une structure compartimentée dont les faces des compartiments sont accessibles au liquide dans lequel l'insert est immergé.

L'inconvénient de cet insert est que, pour son introduction dans le récipient, il nécessite que soit prévue dans la paroi du réceptacle, une ouverture de section adaptée à au moins l'une des sections transversales de l'insert et donc trés importante.

Se pose alors le problème de l'étanchéité de l'obturateur surtout lorsqu'il doit fermer la découpe précitée de manière amovible.

On ne peut évidemment uniquement inclure cet insert lors de la fabrication du réceptacle car le dit insert s'use et pratiquement aprés chaque phase de vinification doit être remplacé.

Un des résultats que l'invention vise à obtenir est un procédé d'aménagement dans un réceptacle d'un insert comprenant un ensemble d'éléments longilignes en bois sensiblement plats qui soit réalisable dans un réceptacle présentant une ouverture de section limitée telle par exemple une trappe de visite.

Le procédé de l'invention est principalement caractérisé en ce qu'on introduit les éléments longilignes un à un dans le réceptacle et en ce que, in situ, à l'aide de moyens de positionnement prévus dans ce réceptacle, on positionne les dits éléments dans le réceptacle et on assemble de manière démontable les éléments longilignes.

L'invention concerne également les moyens pour la mise en oeuvre du procédé et le réceptacle pourvu de ces moyens.

L'invention sera bien comprise à l'aide de la description ci-aprés faite à titre d'exemple non limitatif en regard du dessin ci-annexé qui représente schématiquement :

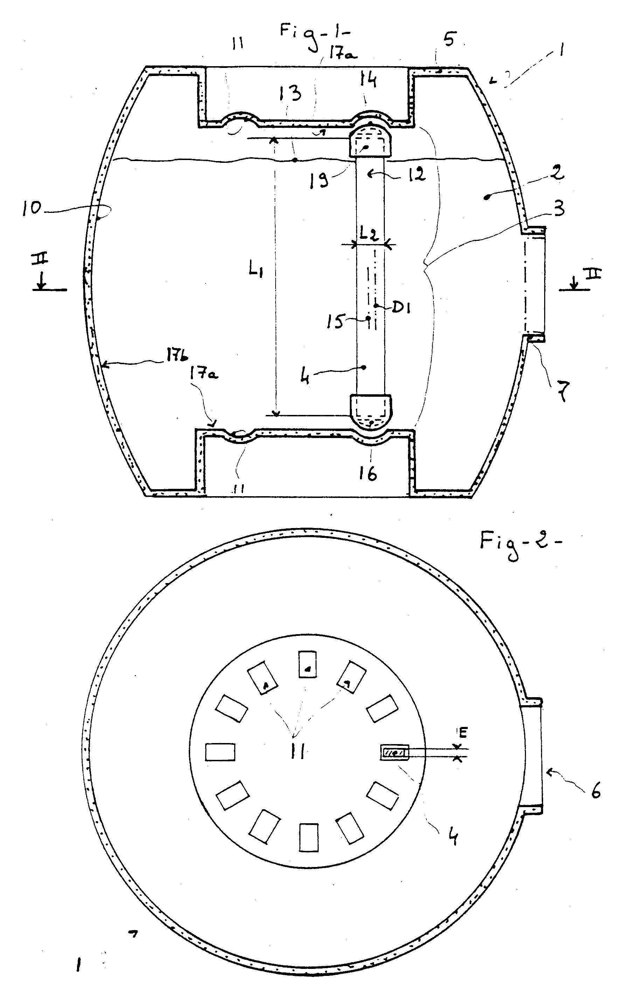

- figure 1 : vu en coupe selon un plan longitudinal globalement vertical, un réceptacle équipé selon le procédé de l'invention,
- figure 2 : une vue selon II-II de la figure 1,

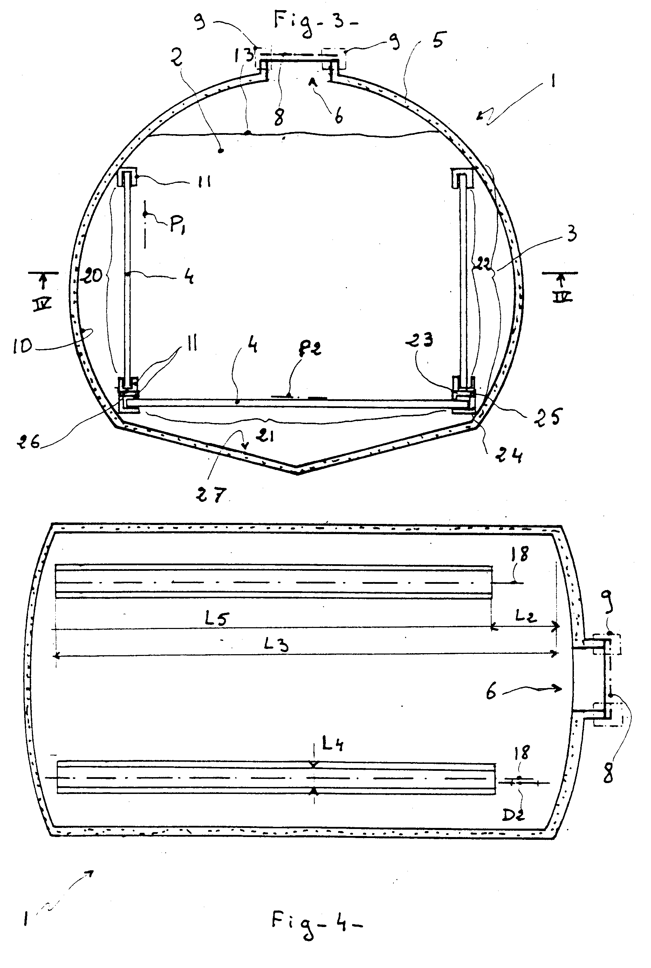

- figure 3 : vu en coupe selon un plan transversal, une variante du réceptacle équipé selon l'invention,
- figure 4 : une coupe selon IV-IV de la figure 3.

En se reportant au dessin, on voit un réceptacle 1 destiné à contenir un liquide 2 tel du jus de raisin.

Tel que cela apparaît également au dessin, le réceptacle loge un insert 3 comprenant des éléments longilignes sensiblement plats 4 en bois.

Cet élément longiligne présente évidemment une longueur L1 de même qu'une certaine largeur L2 et une certaine épaisseur E qui peuvent varier en fonction des applications.

Comme cela est représenté, la paroi 5 du réceptacle comprend au moins une découpe 6 qui forme une ouverture de visite du réceptacle, laquelle découpe est en outre bordée par une collerette formant le siège 7 d'un obturateur 8 fixé par tout moyen connu 9 prévu à cet effet.

De préférence, pendant le stockage en vue du travail du contenant, le réceptacle 1 est installé de manière qu'au moins une telle découpe 6 soit située en partie supérieure du dit réceptacle et cette découpe est, par ailleurs, fermée par un obturateur 8 présentant une certaine perméabilité au gaz pour permettre un échange entre le contenu et l'atmosphère.

Par exemple, pour bénéficier de la perméabilité requise, cet obturateur 8 communément dénommé "bonde" sera réalisé en chêne ou en chataîgner.

Afin que cette perméabilité ne nuise pas au soutirage sous pression, par exemple d'azote, par dessus la bonde peut, pendant le soutirage, être disposée une plaque de fermeture étanche, par exemple en tôle, qui peut être fixée par les mêmes moyens que ceux assurant le maintien de la bonde tels un étrier.

De préférence, la paroi du réceptacle est en matériau neutre et par exemple en métal et notamment en acier inoxydable ou en matière plastique.

Selon l'invention, on introduit les éléments longilignes 4 un à un dans le réceptacle et, in situ, à l'aide de moyens 11 de positionnement prévus dans ce réceptacle, on positionne les dits éléments dans le réceptacle et on assemble de manière démontable les éléments longilignes.

Selon un mode préféré de réalisation :
- avant toute première installation, au niveau de la surface interne 10 de la paroi 5 du réceptacle, on constitue au moins deux portées 11 sensiblement opposées aptes à loger chacune l'une des extrémités 12 d'au moins un élément longiligne puis,
- on se munit d'éléments de longueur appropriée L1 à la distance entre les portées opposées et,
- on engage les extrémités de chaque élément dans les portées 11 en vis à vis précitées et on associe de manière démontable chaque élément.

La mise en oeuvre de ce procédé permet d'utiliser des lames de bois 4 qui, du fait qu'elles peuvent présenter des défauts (non représentés) tels des noeuds, ne peuvent être utilisées pour la confection de cuves et/ou de barriques.

En effet, la construction de réceptacle en bois exige une sélection draconnienne des lames de bois utilisées et on estime que moins d'un dizième du volume des troncs d'arbre abattus est exploité.

Avantageusement, l'invention permet d'utiliser des lames de bois présentant des imperfections de structure.

Outre l'intérêt économique, l'invention a donc un intérêt écologique considérable puisqu'elle permet de préserver des arbres.

De même manière que cela se pratiquait lors de l'emploi de tonneaux en bois, avant mise en place, les lames de bois pourront être soumises à un traitement thermique et plus particulièrement à une carbonisation superficielle.

A cet effet, au lieu d'utiliser un procédé traditionnel comme le brulage de la surface des lames par contact direct d'une flamme, telle par exemple celle d'un chalumeau, ce qui engendre des défauts d'homégénisation de traitement ainsi qu'une destruction partielle du tanin, les lames de bois sont soumises pendant une période prédéfinie à un rayonnement infra-rouge suffisamment étendu et uniforme pour induire sur toute la surface de chaque lame un traitement homogène.

Pour en revenir à la description de l'invention, on précise qu'on aménage évidemment au moins l'une des portées 11 sous le niveau 13 présumé du liquide dans le réceptacle 1.

Conformément à l'invention, on constitue, d'une part, au niveau de la surface 10 de la paroi 5 du réceptacle et, d'autre part, au niveau de chaque extrémité 12 de chaque élément longiligne 4 des portées complémentaires 11, 14 coopérant par emboitement selon une direction privilégiée D1, D2.

Suivant l'invention, d'une part, les portées complémentaires 11, 14 sont conçues pour coopérer par emboitement selon une direction D1 sensiblement parallèle à l'axe longitudinal 15 de chaque élément longiligne et, d'autre part, entre au moins l'une des portées 11, 14 et son support, c'est à dire la paroi 5 du réceptacle et/ou l'une des extrémités 12 d'un élément 4, est interposé au moins un organe élastique 16 sollicitant au moins cette portée 14 dans sa direction d'emboitement avec la portée complémentaire 11.

De préférence, lorsque le réceptacle est d'un volume équivalent à celui utilisé pour le transport et le négoce de liquide, tel une barrique, un tonneau, un fût ... mais surtout lorsque sa paroi comporte au noins deux faces internes opposées 17a sensiblement planes et circulaires et notamment une face interne de révolution 17b, c'est au niveau de chacune de ses faces internes opposées sensiblement planes qu'on constitue les portées 11 en orientant de préférence ces dernières selon une disposition rayonnante au centre de chaque face plane circulaire.

Dans ce cas, l'ouverture de visite 6 du réceptacle est découpée dans la zone de la paroi qui porte la face de révolution et son diamètre est déterminé en rapport avec la longueur des éléments à engager ainsi que leur largeur et le diamètre moyen du réceptacle.

D'une part, les portées 11 constituées au niveau de la paroi du réceptacle sont chacune constituée par au moins une surface courbe d'une empreinte réalisée dans la paroi et, d'autre part, la portée 14 agencée au niveau de chaque extrémité 12 d'un élément longiligne 4 consiste chacune en une butée 16 élastiquement déformable de forme globalement complémentaire à celle du réceptacle 1, cette butée présentant par ailleurs au moins un pied 19 d'emboitement sur l'extrémité 12 de l'élément longiligne.

Lorsque le réceptacle est d'un volume plus important par exemple lorsqu'il est du type comprenant une ouverture 6 de visite par une personne et essentiellement une paroi globalement cylindrique par exemple d'axe horizontal et de longueur déterminée L3, on agence les portées 11 sur au moins deux génératrices 18 de la surface interne qui sont espacées au moins de la valeur de la dimension longitudinale L1 des éléments 4.

Selon l'invention, on agence les portées 11 constituées au niveau de la paroi du réceptacle de manière à former avec les éléments longilignes au moins deux parois internes 20 à 22 situées dans des plans P1, P2 approximativement perpendiculaires.

Dans ce cas, au moins certaines des portées complémentaires 11, 14 sont conçues pour coopérer par emboitement selon une direction D2 sensiblement parallèle à chaque génératrice 18 de la surface interne 10 de la paroi 5 au droit de laquelle elles s'étendent.

Au moins certaines des portées 11 constituées au niveau de la surface interne 10 du réceptacle consistent en un profilé cornière de section transversale en U d'une part de largeur L4 au moins suffisante pour accueillir un élément longiligne selon son épaisseur E et, d'autre part, de longueur L5 au plus égale à la longueur L3 de la génératrice 18 de la surface interne au long de laquelle elle doit s'étendre, diminuée d'au moins la largeur L2 d'un élément longiligne 4.

Grâce à cette particularité technique, un passage est réservé entre l'une des extrémités des profilés et la face extrême correspondante du réceptacle et les éléments longilignes peuvent ainsi, en franchissant ce passage, être engagés successivement entre les profilés.

Conformément à l'invention, au moins deux portées 11, constituées au niveau de la paroi 5 du réceptacle pour recevoir des extrémités 12 d'éléments longilignes adjacents à un même angle entre deux parois 20 à 22, sont associées entre elles, l'une d'elles étant constituée de deux machoires 23, 24 articulées selon un axe 25 sensiblement parallèle à la génératrice 18 au long de laquelle s'étendent les portées 11 considérées et l'une (23) de ces machoires 23, 24 étant solidarisée à l'autre portée qui, après montage des éléments, tendra à enserrer selon leur épaisseur E les éléments longilignes 4 juxtaposés entre les machoires 23, 24.

Pour cette solidarisation, la machoire appuie par exemple sur une face externe 26 de l'autre portée telle le fond du profilé en U.

Ces particularités techniques permettent de faciliter le montage d'au moins l'une des parois 20 à 22 d'éléments longilignes dans le réceptacle et plus particulièrement de la paroi 21 d'éléments à même de constituer un plancher au dessus du fond 27 du réceptacle.

Tel que cela apparaît au dessin, le fond 27 du réceptacle peut en fait être constitué de deux plans convergents formant une goulotte d'évacuation et la construction d'un plancher au dessus de cette goulotte facilite ultérieurement les déplacements de la personne qui travaille dans le réceptacle par exemple en vue du montage latéral des autres éléments.

De préférence, au moins l'une des machoires est équipée d'une denture.

Les portées constituées au niveau de la face interne du réceptacle telles les profilés et leurs éventuelles machoires sont associées à la face interne du réceptacle par tout moyen connu.

L'homme de l'art est à même de déterminer la nature des moyens de fixation appropriés et ces moyens n'ont donc pas a être représentés.

## Revendications

1. Procédé d'aménagement ,dans un réceptacle (1) présentant dans sa paroi une ouverture (6),d'un insert (3) comprenant des éléments longilignes plats (4) et donc présentant chacun une certaine longueur (L1), une certaine épaisseur (E) et une certaine largeur (L2),
ce procédé étant **CARACTERISE** en ce qu'on introduit les éléments longilignes (4) un à un dans le réceptacle et en ce que, in situ, à l'aide de moyens (11) de positionnement prévus dans ce réceptacle, on positionne les dits éléments dans le réceptacle et on assemble de manière démontable les éléments longilignes.

2. Procédé selon la revendication 1 **caractérisé** en ce que
- avant toute première installation, au niveau de la surface interne (10) de la paroi (5) du réceptacle, on constitue au moins deux portées (11) sensiblement opposées aptes à loger chacune l'une des extrémités (12) d'au moins un élément longiligne puis,
- on se munit d'éléments de longueur appropriée (L1) à la distance entre les portées opposées et,
- on engage les extrémités de chaque élément dans les portées (11) en vis à vis précitées et on associe de manière démontable chaque élément.

3. Procédé selon la revendication 2 **caractérisé** en ce qu'on constitue, d'une part, au niveau de la surface (10) de la paroi (5) du réceptacle et, d'autre part, au niveau de chaque extrémité (12) de chaque élément longiligne (4) des portées complémentaires (11, 14) coopérant par emboitement selon une direction privilégiée (D1, D2).

4. Procédé selon la revendication 3 **caractérisé** en ce que, lorsque le réceptacle est d'un volume équivalent à celui utilisé pour le transport et le négoce du liquide mais surtout lorsque sa paroi comporte au moins deux faces internes opposées (17a) sensiblement planes et circulaires et notamment une face interne de révolution (17b), c'est au niveau de chacune de ses faces internes opposées sensiblement planes qu'on constitue les portées (11) en orientant de préférence ces dernières selon une disposition rayonnante au centre de chaque face plane circulaire.

5. Procédé selon la revendication 3 **caractérisé** en ce que, lorsque le réceptacle est du type comprenant une ouverture (6) de visite par une personne et essentiellement une paroi globalement cylindrique par exemple d'axe horizontal et de longueur déterminée (L3), on agence les portées (11) sur au moins deux génératrices (18) de la surface interne qui sont espacées au moins de la valeur de la dimension longitudinale (L1) des éléments (4).

6. Procédé selon la revendication 3 ou 4 **caractérisé** en ce qu'on agence les portées (11) constituées au niveau de la paroi du réceptacle de manière à former avec les éléments longilignes au moins deux parois internes (20 à 22) situées dans des plans (P1, P2) approximativement perpendiculaires.

7. Moyens pour la mise en oeuvre du procédé selon la revendication 3 ou 4 **caractérisés** en ce que d'une part, les portées complémentaires (11, 14) sont conçues pour coopérer par emboitement selon une direction (D1) sensiblement parallèle à l'axe longitudinal (15) de chaque élément longiligne et, d'autre part, entre au moins l'une des portées (11, 14) et son support c'est à dire la paroi (5) du réceptacle et/ou l'une des extrémités (12) d'un élément (4) est interposé au moins un organe élastique (16) sollicitant au moins cette portée (14) dans sa direction d'emboitement avec la portée complémentaire (11).

8. Moyens pour la mise en oeuvre du procédé selon l'une quelconque des revendications 1 à 6 **caractérisés** en ce qu'au moins certaines des portées complémentaires (11, 14) sont conçues pour coopérer par emboitement selon une direction (D2) sensiblement parallèle à chaque génératrice (18) de la surface interne (10) de la paroi (5) au droit de laquelle elles s'étendent.

9. Moyens selon la revendication 8 **caractérisés** en ce qu'au moins certaines des portées (11) constituées au niveau de la surface interne (10) du réceptacle consistent en un profilé de section transversale en (U) d'une part de largeur (L4) au moins suffisante pour accueillir un élément longiligne selon son épaisseur (E) et, d'autre part, de longueur (L5) au plus égale à la longueur (L3) de la génératrice (18) de la surface interne au long de laquelle elle doit s'étendre, diminuée d'au moins la largeur (L2) d'un élément longiligne (4).

10. Moyens selon la revendication 7 ou 8 **caractérisés** en ce qu'au moins deux portées antagonistes (11) constituées au niveau de la paroi (5) du réceptacle c'est à dire deux portées (11) destinées à coopérer avec des extrémités opposées (12) d'éléments longilignes comprennent chacune au moins deux machoires (23, 24) articulées selon un axe (25) sensiblement parallèle à la génératrice (18) au long de laquelle s'étend la portée (11) considérée, ces machoires étant constituées pour en position fermée enserrer selon leur épaisseur (E) des éléments longilignes (4) juxtaposés et au moins l'une de ces machoires (23, 24) porte notamment sur une face externe (26), au moins une cornière de section transversale en (U) et orientée pour, en position fermée des dites machoires et en combinaison avec une cornière antagoniste constituant une portée au niveau d'une génératrice (18) globalement parallèle à celle considérée, maintenir selon leur épaisseur des éléments longilignes juxtaposés dans un plan (P1) sécant au plan (P2) défini par les éléments enserrés entre les machoires.

11. Réceptacle présentant dans sa paroi (4) une ouverture (6) caractérisé en ce qu'il comprend les moyens objets d'une des revendications 7 à 10.

## Claims

1. Process for arranging in a container (1), which has an opening (6) in its wall, an insert (3) comprising flat elongate elements (4) which thus each have a certain length (L1), a certain thickness (E) and a certain width (L2), this process being characterized in that the elongate elements (4) are introduced one by one into the container, and in that the said elements are positioned in the container in situ with the aid of positioning means (11) provided in this container, and the elongate elements are assembled in dismantlable manner.

2. Process according to Claim 1, characterized in that
- before any first installation, at the inner surface (10) of the wall (5) of the container, at least two substantially opposed beating members (11) are formed, each suitable for accommodating one of the ends (12) of at least one elongate element, then
- elements or length (L1) appropriate to the spacing between the opposed bearing members are provided, and
- the ends of each element are engaged in the above-mentioned bearing members (11) opposite one another, and each element is joined in dismantlable manner.

3. Process according to Claim 2, characterized in that, on the one hand, at the surface (10) of the wall (5) of the container and, on the other hand, at each end (12) of each elongate element (4) there are formed complementary hearing members (11, 14) cooperating by fitting together in a favoured direction (D1, D2).

4. Process according to Claim 3, characterized in that when the container has a volume equivalent to that used for transportation and sale of the liquid, but especially when its wall has at least two substantially planar and circular opposed inner faces (17a) and in particular an inner face of revolution (17b), it is at each of its substantially planar opposed inner faces that the bearing members (11) are formed, preferably orienting the latter in a radiating arrangement at the centre of each planar circular face.

5. Process according to Claim 3, characterized in that when the container is of the type comprising an inspection opening (6) for a person and substantially one generally cylindrical wall, for example of horizontal axis and predetermined length (L3) the bearing members (11) are arranged on at least two generatrices (18) of the inner surface, spaced at least by the value of the longitudinal dimension (L1) of the elements (4).

6. Process according to Claim 3 or 4, characterized in that the bearing members (11) formed at the wall of the container are arranged such that they form with the elongate elements at least two inner walls (20 to 22) which are located in approximately perpendicular planes (P1, P2).

7. Means for implementing the process according to Claim 3 or 4, characterized in that, on the one hand, the complementary bearing members (11, 14) are designed to cooperate by fitting in a direction (D1) substantially parallel to the longitudinal axis (15) of each elongate element and, on the other hand, between at least one of the bearing members (11, 14) and its support, that is to say the wall (5) of the container, and/or one of the ends (12) of an element (4) there is placed at least one resilient member (16) urging at least this bearing member (14) in its direction of fitting with the complementary bearing member (11).

8. Means for implementing the process according to any one of Claims 1 to 6, characterized in that at least some of the complementary bearing members (11, 14) are designed to cooperate by fitting in a direction (D2) substantially parallel to each generatrix (18) of the inner surface (10) of the wall (5) perpendicular to which they extend.

9. Means according to Claim 8, characterized in that at least some of the bearing members (11) formed at the inner surface (10) of the container comprise a profiled element of U-shaped cross-section, on the one hand having a width (L4) at least sufficient to receive an elongate element depending on its thickness (E) and on the other hand having a length (L5) at most equal to the length (L3) of the generatrix (18) of the inner surface along which it has to extend, decreased at least by the width (L2) of an elongate element (4).

10. Means according to Claim 7 or 8, characterized in that at least two opposite bearing members (11) formed at the wall (5) of the container, that is to say two bearing members (11) intended to cooperate with opposed ends (12) of elongate elements, each comprise at least two articulated jaws (23, 24) along an axis (25) substantially parallel to the generatrix (18) along which There extends the bearing member (11) concerned, these jaws being formed so that in the closed position they can clamp depending on their thickness (E) juxtaposed elongate elements (4), and at least one of these jaws (23, 24) bears, in particular on an outer face (26), at least one angle piece of U-shaped cross-section oriented so that in the closed position of the said jaws and in combination with an opposite angle piece forming a bearing member at a generatrix (18) which is generally parallel to that concerned, they can hold depending on their thickness juxtaposed elongate elements in a plane (P1) intersecting the plane (P2) defined by the elements clamped between the jaws.

11. Container having in its wall (4) an opening (6), characterized in that it comprises the means forming the subject of one of Claims 7 to 10.

## Patentansprüche

1. Verfahren zur Fixierung eines Einsatzes (3) in einem Behälter (1) mit einer Öffnung (6) in seiner Wandung, wobei der Einsatz (3) flache langgestreckte Elemente (4) aufweist und damit jeweils eine bestimmte Länge (L1), eine bestimmte Dicke (E) und eine bestimmte Breite (L2) aufweist,
**dadurch GEKENNZEICHNET**, daß die langgestreckten Elemente (4) jeweils einzeln in den Behälter einbringt, daß mit Hilfe von in diesem Behälter vorgesehenen Positioniermitteln (11) die Elemente in dem Behälter in ihrer Lage positioniert werden, und daß die langgestreckten Elemente auseinanderbaubar zusammengebaut werden.

2. Verfahren Anspruch 1, **dadurch gekennzeichnet**, daß
- vor jeglichem ersten Einbau in Höhe der Innenfläche (10) der Wandung (5) des Behälters mindestens zwei im wesentlichen gegenüberliegende Lagerbereiche (11) gebildet werden, die zur Lagerung jeweils eines der Enden (12) mindestens eines langgestreckten Elements geeignet sind, daß anschließend
- Elemente entsprechender Länge (L1) im Abstand zwischen den gegenüberliegenden Lagerbereichen vorgesehen werden, und
- daß die Enden jedes Elements in die sich gegenüberliegenden Lagerbereiche (11) eingesetzt werden und jedes Element auseinanderbaubar zugeordnet wird.

3. Verfahren nach Anspruch 2, **dadurch gekennzeichnet**, daß einerseits in Höhe der Oberfläche (10) der Wandung (5) des Behälters und andererseits in Höhe jedes Endes (12) jedes langgestreckten Elements (4) komplementäre Lagerbereiche (11, 14) gebildet werden, die in einer vorrangigen Richtung (D1, D2) unter Zusammenfügung miteinander zusammenwirken.

4. Verfahren nach Anspruch 3, **dadurch gekennzeichnet**, daß dann, wenn der Behälter ein Volumen aufweist, das demjenigen entspricht, das für den Transport der Flüssigkeit und den Handel damit, vor allem aber dann, wenn der Behälter mindestens zwei gegenüberliegende, im wesentlichen ebene und runde Innenflächen (17a) und insbesondere eine als Rotationsfläche (17b) ausgebildete Innenfläche aufweist, d.h. in Höhe jeder seiner gegenüberliegenden, im wesentlichen ebenen Innenflächen, die Lagerbereiche (11) so ausgebildet werden, daß diese dabei vorzugsweise in einer strahlenförmig zum Zentrum jeder runden ebenen Fläche ausgerichtet werden.

5. Verfahren nach Anspruch 3, **dadurch gekennzeichnet**, daß dann, wenn der Behälter von der Art ist, die eine Einstiegsöffnung für Personen und im wesentlichen eine ganz allgemein zylindrische Wandung, beispielsweise mit horizontaler Achse und vorgegebener Länge (L3), aufweist, die Lagerbereiche (11) auf mindestens zwei Erzeugenden (18) der Innenfläche angeordnet werden, die voneinander um mindestens den Wert der Längsabmessung (L1) der Elemente (4) beabstandet sind.

6. Verfahren nach Anspruch 3 oder 4, **dadurch gekennzeichnet**, daß die in Höhe der Wandung des Behälters vorgesehenen Lagerbereiche (11) so angeordnet werden, daß sie zusammen mit den langgestreckten Elementen mindestens zwei Innenwandungen (20 bis 22) bilden, die zueinander in in etwa senkrechten Ebenen (P1, P2) liegen.

7. Einrichtung zur Durchführung des Verfahrens nach Anspruch 3 oder 4, **dadurch gekennzeichnet**, daß einerseits die komplementären Lagerbereiche (11, 14) zum Zusammenwirken durch Zusammenfügung in einer zur Längsachse (15) jedes langgestreckten Elements im wesentlichen parallelen Richtung (D1) vorgesehen sind, und daß andererseits zwischen mindestens einem der Lagerbereiche (11, 14) und dessen Abstützung, d.h. der Wandung (5) des Behälters und/oder einem der Enden (12) eines Elements (4) mindestens ein elastisches Teil (16) zwischengesetzt ist, welches zumindest diesen Lagerbereich (14) in der Richtung seiner Zusammenfügung mit dem komplementären Lagerbereich (11) spannt.

8. Einrichtung zur Durchführung des Verfahrens nach einem der Ansprüche 1 bis 6, **dadurch gekennzeichnet**, daß zumindest bestimmte komplementäre Lagerbereiche (11, 14) zum Zusammenwirken durch Zusammenfügung in einer zu jeder Erzeugenden (18) der Innenfläche (10) der Wandung (5), zu der sie sich geradlinig erstrecken, im wesentlichen parallelen Richtung (D2) vorgesehen sind.

9. Einrichtung nach Anspruch 8, **dadurch gekennzeichnet**, daß zumindest bestimmte Lagerbereiche (11), die in Höhe der Innenfläche (10) des Behälters ausgebildet sind, aus einem Profil mit U-förmigem Querschnitt bestehen, das einerseits eine Breite (L4) aufweist, die zumindest ausreicht, um ein langgestrecktes Element über dessen Dicke (E) aufzunehmen, und andererseits eine Länge (L5), die höchstens gleich der Länge (L3) der Erzeugenden (18) der Innenfläche ist, entlang welcher sie verlaufen soll, mindestens vermindert um die Breite (L2) eines langgestreckten Elements (4).

10. Einrichtung nach Anspruch 7 oder 8, **dadurch gekennzeichnet**, daß mindestens zwei Gegen-Lagerbereiche (11), die in Höhe der Wandung (5) des Behälters ausgebildet sind, d.h. zwei Lagerbereiche (11), die zum Zusammenwirken mit den gegenüberliegenden Enden (12) der langgestreckten Elemente bestimmt sind, jeweils mindestens zwei entlang einer zur Erzeugenden (18), entlang welcher sich der jeweilige Lagerbereich (11) erstreckt, im wesentlichen parallelen Achse (25) angelenkte Backen aufweisen, weiche so ausgeblidet sind, daß sie in geschlossener Stellung entlang ihrer Dicke (E) nebeneinander liegende langgestreckte Elemente (4) umschließen und daß mindestens eine dieser Backen (23, 24) insbesondere auf ihrer Außenfläche (26) mindestens ein Winkelstück mit U-förmigem Querschnitt aufweist, das so ausgerichtet ist, daß bei geschlossener Stellung der Backen und in Verbindung mit einem Gegen-Winkelstück, das einen Lagerbereich in Höhe einer zur jeweils betrachteten Erzeugenden im allgemeinen parallelen Erzeugenden (18) bildet, die langgestreckten Elemente, die in einer sich mit der von den zwischen den Backen eingeschlossenen Elementen definierten Ebene (P2) schneidenden Ebene (P1) nebeneinander liegen, entlang ihrer Dicke gehalten werden.

11. Behälter, der in seiner Wandung (4) eine Öffnung (6) aufweist, **dadurch gekennzeichnet**, daß er die Einrichtungen aufweist, die Gegenstand eines der Ansprüche 7 bis 10 sind.
